# EUROPEAN PATENT APPLICATION

(11) **EP 2 930 108 A1**
(43) Date of publication of application: **14.10.2015**
(21) Application number: 15162650.4
(22) Date of filing: 07.04.2015
(51) Int. Cl.: B64D 11/06, B60N 3/00

(54) **MECHANISM FOR OPENING AND CLOSING A PLANE OR A TRAY TABLE FOR SEATS, IN PARTICULAR AIRPLANE SEATS**

(30) Priority: 07.04.2014 IT RM20140180
(71) Applicant: Geven S.p.A., 80035 Nola (NA) (IT)
(72) Inventor: Veneruso, Getullio, 80035 NOLA (NA) (IT)
(74) Representative: Iannone, Carlo Luigi

(57) **Abstract**

The invention concerns a mechanism for opening and closing a plane or a tray table for seats, in particular airplane seats, said seat (1) being fixed by means for fastening to the floor, such as a beam (2) and similar, said mechanism providing at least a substantially central arm (5) for supporting and displacing said plane or tray table (4), between a rest position and at least one use position, said at least an arm (5) being coupled to said means for fastening seat (1) to the floor (2) independently from the fixing of the seat (1) itself.

## Description

The present invention relates to an improvement to a mechanism for opening and closing a plane or a tray table for seats, in particular airplane seats.

More specifically, the invention refers to a mechanism comprising at least an improved arm, preferably a monoarm, for opening and closing table or tray in a seat, particularly an airplane seat.

In the following, the specification will be addressed to the application of the mechanism according to the invention to airplane seats, but it is well evident that the same solution can be also adopted in different sectors, such as railway seats, bus seats, of for stadium seats, palasport seats, theatre seats, arenas, etc.

As it is well known, surface provided behind a seat, such as a tray or a table, must be used for beverage consumption, support of objects and7or of electronic apparatuses, etc. by a passenger seated on a second seat of the rear row.

Table support mechanism must obviously at least ensure a closure or rest position, with the table coupled with the rear wall of the seat, and at least an open or use position, substantially parallel with respect to the plane on which the seat is laid.

This kind of systems presently available on the market permit angular motion of the tray by at least two lateral arms that, while the opening the table, can reduce the room available for the passenger (interference with his/her knees). Rotation axis of the two arms coincides with the back rotation axis. This causes many problems when adjusting the tray and a low reliability while opened. Rotation occurs about two bushes spliced on two pins provided in a transverse element of the airplane seat.

Tray opening angle is typically ensured by an abutment mechanism close to the rotation axis.

Abutment mechanism is suitably dimensioned in such a way to resist to the different not conventional loads that can be applied on the tray, e.g. if passenger rests on the tray, or in case the same tray is continuously opened and closed.

Therefore, dimension and weight of known mechanisms cannot be optimised since they must support different not conventional loads, maintaining at the same time the same functionality, without the need of requiring the use of a not conventional material increasing designing/maintenance costs.

Among the main problems faced during the years when designing table support mechanisms for this kind of seats, they can be mentioned the needing of limiting at most dimensions of the table in an open position into the space destined to the passenger seated on the rear seat, and that of ensuring the position parallel with respect to the resting plane in case seat supporting the table is reclined.

In this situation, and in order to give an optimum response to the above problems, it is included the solution suggested according to the present invention, providing a mechanism having at least an arm directly hinged on the seat frame, permitting a first adjustment of the opening the tray within a continuous angular position range and a second compensation adjustment with a minimum angle of 3° with respect to the flight direction.

Another object of the present invention is that of suggesting a mechanism providing a displacement arm comprised of at least two parts or of a single component.

It is therefore specific object of the present invention a mechanism for opening and closing a plane or a tray table for seats, in particular airplane seats, said seat being fixed by means for fastening to the floor, such as a beam and similar, said mechanism providing at least a substantially central arm for supporting and displacing said plane or tray table, between a rest position and at least one use position, said at least an arm being coupled to said means for fastening seat to the floor independently from the fixing of the seat itself.

Particularly, according to the invention, said plane is provided with a rotation pivot for positioning it in a vertical position and in at least a substantially horizontal position.

Further, according to the invention, means are provided for adjusting the rotation of the plane.

Particularly, according to the invention, balancing adjustment means are provided for adjusting an angle in relation to the flight direction, said adjusting means being made of a first grain for adjusting the position of the tray table in an opening position and a second grain for adjusting the position of the tray table in a closing position, and a slot for the sliding of a rotation pivot of said tray table between said opening position and said closing position.

In a preferred embodiment of the mechanism according to the invention, the coupling between said at least an arm and said means for fastening said seat to the floor independently from the fastening of the seat itself comprises two antifriction half-bushes, straddling arranged on the beam, said half-bushes being held on the beam, on the upper part, by a fastening end of said at least an arm, and in the bottom part, by a fastening element, said fastening end and said fastening element being shaped in such way as to couple themselves outwardly to said half-bushes, which in turn adapt themselves to the cross-section of the beam, and further providing fastening means to the beam.

Finally, according to the invention, said fastening means to the beam are at least two clamps.

The present invention will be described in the following, for illustrative but not limitative purposes according to its preferred embodiments, with particular reference to the figures of the enclosed drawings, wherein:
figure 1 is a rear schematic view of a seat with opening and closing mechanism for a plane or table for seats, particularly airplane seats, according to the invention;
figure 2 shows a first particular of the mechanism according to the invention;
figure 3 shows a second particular of the mechanism according to the invention;
figure 4 is a section view of a particular of the mechanism according to the invention; and
figure 5 is an exploded view of a further particular of the mechanism according to the invention.

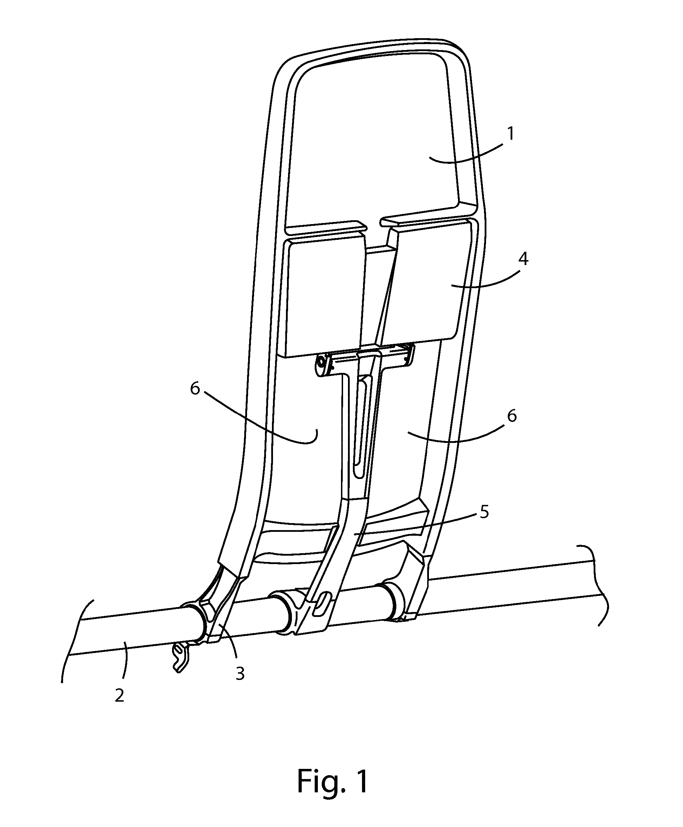

Observing first figure 1, it is schematically shown a seat 1, namely its rear part, mounted on a lower beam 2, by mechanisms 3, that will be further not described in the following, since they are not part of the invention.

A table 4 is provided behind the seat 1, shown in the closed or rest position, but it can take at least an open or use position, said table being supported by a central arm 5, said arm 5 being supported by said beam 2.

Two zones 6 are realized laterally with respect to said arm 5, intended to realize pockets (not shown for magazines, objects, food, etc.

In other embodiments, not shown, said table according to the invention can provide a pair of arms, or a plurality of arms, always provided in the central portion of the table, without departing from the scope of the present invention.

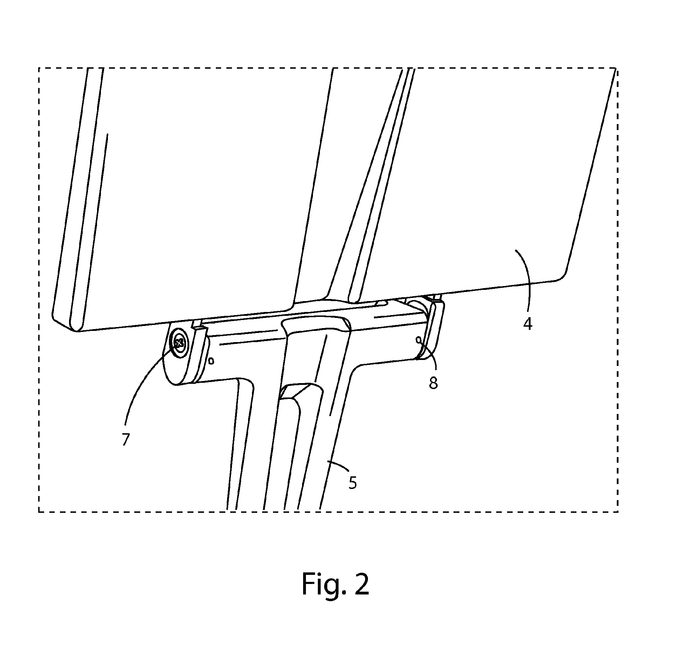

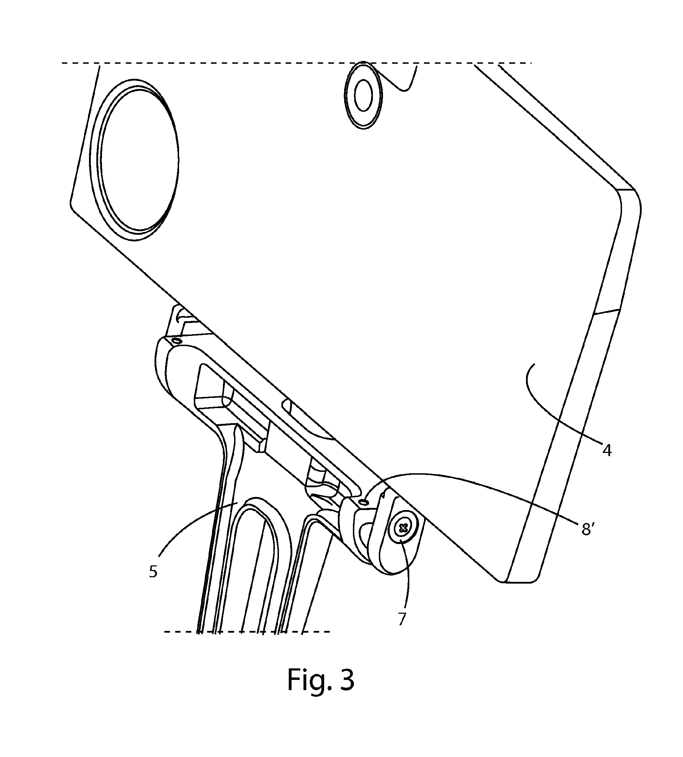

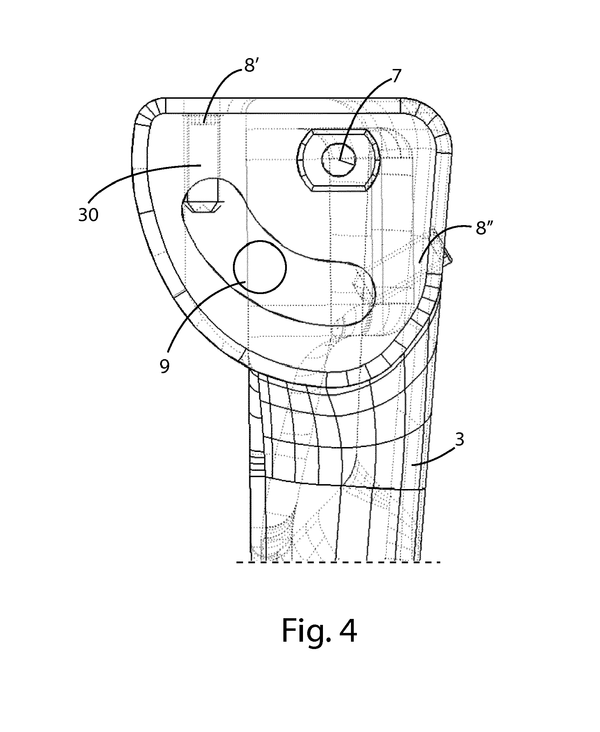

Particularly, in figures 2 and 3, they are shown the pin 7, for rotation of the table 4, and grain 8' for adjusting the table 4 position in the opening position. From section of figure 4 it is noted a second grain 8" for adjusting the position of the table in the closure position, and a slot 9 within which a pivoting arm slides for rotation of the same table 4.

Adjustment of the two grains permits obtaining adjustment of closure and opening abutment of the table 4. Particularly, an adjustment is obtained by grain 8' compensating a minimum angle, e.g. 3°, with respect to the flight direction.

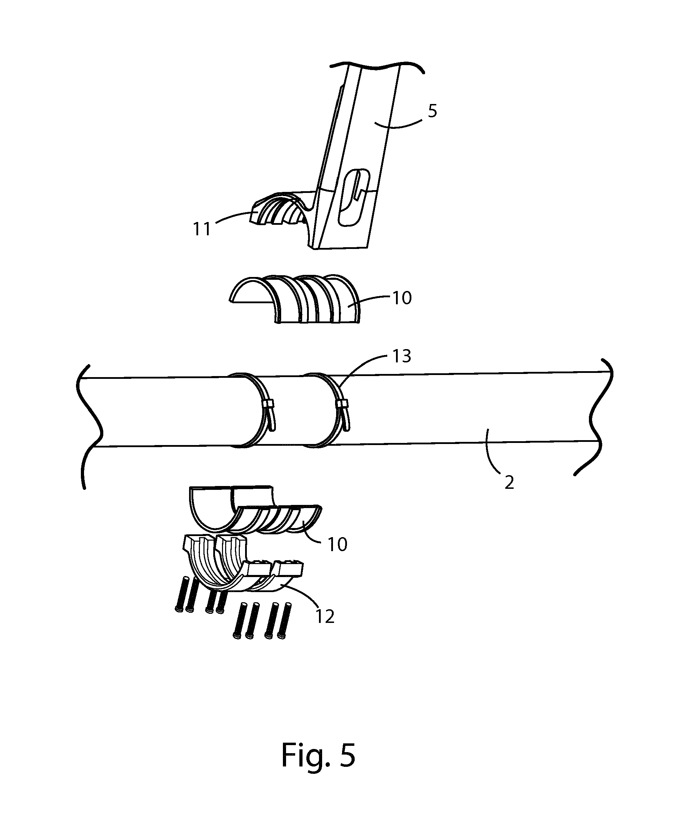

Specifically observing figure 5, it is shown table 4 rotation mechanism, and particularly rotation of arm 5 with respect to support beam 2.

Said mechanism provides two anti-friction half-bushes 10, straddling the beam 2. Half-bushes 10 are maintained on beam 2, above, by fastening end 11 of arm 5, and below, by a fixing element 12. Obviously, end 11 and fixing element 12 are so shaped to be able to couple outside the half-bushes 10, which conform to the beam 2 section. Further, two clamps 13 are provided on the beam 2.

In other embodiments, it is also possible providing other types of fixing means, without departing from the scope of invention.

Mechanism according to the invention was designed in order to optimize the dimensions ensuring the proper compromise between weight and performances without ignoring ergonomic criteria in order to increase the passenger comfort when flying,

A further result obtained by the solution according to the invention is that of obtaining a noticeable reduction of manufacturing time by a quick coupling/decoupling device providing the use of conventional tools during removal/assembly steps.

Further, the solution according to the present invention also provides possibility of adding additional pockets/spaces integral to the seat back and provided laterally with respect to the mechanism in its free areas.

The solution according to the invention permits installation/removal of single arm mechanism on seat frame, possibility of adjusting the tray opening within a continuous angular position range; an optimization of maintenance time/costs by using conventional tools; possibility of reducing the weight of the mechanism; higher reliability; higher modularity of the mechanism and reduction of the number of useful parts for its operation; higher passenger comfort due to improvement of "living space" during flight.

Solution suggested according to the present invention fully satisfy present trend of airline companies to give innovative solutions on board aiming to saving weight, besides installation and maintenance simplicity, without jeopardizing the required "appeal" that can be generated by a solution with new aesthetic lines.

Thus, it is a multifunctional solution, since it permits reaching different goals sensible for airlines, such as total seat weight reduction and increase of passenger comfort.

The present invention has been described for illustrative, but not limitative, purposes, according to its preferred embodiments, but it is to be understood that variations and/or modifications can be introduced by those skilled in the art without departing from the relevant scope as defined in the enclosed claims.

## Claims

1. Mechanism for opening and closing a plane or a tray table for seats, in particular airplane seats, said seat (1) being fixed by means for fastening to the floor, such as a beam (2) and similar, said mechanism providing at least a substantially central arm (5) for supporting and displacing said plane or tray table (4), between a rest position and at least one use position, said at least an arm (5) being coupled to said means for fastening seat (1) to the floor (2) independently from the fixing of the seat (1) itself.

2. Mechanism according to claim 1, **characterized in that** said plane (4) is provided with a rotation pivot (7) for positioning it in a vertical position and in at least a substantially horizontal position.

3. Mechanism according to claim 2, **characterized in** providing means for adjusting (8) the rotation of the plane (4).

4. Mechanism according to one of the preceding claims, **characterized in** providing balancing adjustment means for adjusting an angle in relation to the flight direction.

5. Mechanism according to claim 4, **characterized in that** said adjusting means are made of a first grain (8') for adjusting the position of the tray table in an opening position and a second grain (8") for adjusting the position of the tray table in a closing position, and a slot (9) for the sliding of a rotation pivot of said tray table (4) between said opening position and said closing position.

6. Mechanism according to one of the previous claims, **characterized in that** the coupling between said at least an arm (5) and said means for fastening said seat (1) to the floor (2) independently from the fastening of the seat (1) itself comprises two antifriction half-bushes (10), straddling arranged on the beam (2), said half-bushes (10) being held on the beam (2), on the upper part, by a fastening end (11) of said at least an arm (5), and in the bottom part, by a fastening element (12), said fastening end (11) and said fastening element (12) being shaped in such way as to couple themselves outwardly to said half-bushes (10), which in turn adapt themselves to the cross-section of the beam (2), and in further providing fastening means (13) to the beam (2).

7. Mechanism according to the previous claim, **characterized in that** said fastening means to the beam (2) are at least two clamps (13).
